# EUROPEAN PATENT SPECIFICATION

(11) **EP 2 480 009 B1**
(45) Date of publication and mention of the grant of the patent: **14.03.2018**
(21) Application number: 10788642.6
(22) Date of filing: 24.03.2010
(51) Int. Cl.: H04L 12/58, H04W 4/00, H04W 4/12

(54) **MULTIMEDIA MESSAGE TRANSMISSION METHOD AND APPARATUS THEREOF, AND DOMAIN NAME SERVER**
ÜBERTRAGUNGSVERFAHREN FÜR MULTIMEDIANACHRICHTEN UND VORRICHTUNG DAFÜR SOWIE DOMÄNENNAMEN-SERVER
PROCÉDÉ ET APPAREIL DE TRANSMISSION DE MESSAGES MULTIMÉDIA, ET SERVEUR DE NOMS DE DOMAINES

(30) Priority: 20.10.2009 CN 200910175176
(43) Date of publication of application: 25.07.2012
(73) Proprietor: ZTE Corporation, Shenzhen, Guangdong 518057 (CN)
(72) Inventor: HUANG, Xiang, Shenzhen City Guangdong Province, 518057 (CN)
(74) Representative: Novagraaf Technologies
(86) International application number: PCT/CN2010/071261
(87) International publication number: WO 2010/145246

(56) References cited:
- EP-A1- 1 450 526
- EP-A1- 1 555 836
- WO-A1-01/33803
- WO-A2-2006/036500
- CN-A- 101 068 378
- CN-A- 101 291 467
- CN-A- 101 431 723
- US-A1- 2009 233 618

## Description

### Technical Field

The present invention relates to the field of multimedia communication technologies, and in particular, to a multimedia message transmitting method, a multimedia message transmitting device, and a domain name system server.

### Background of the Related Art

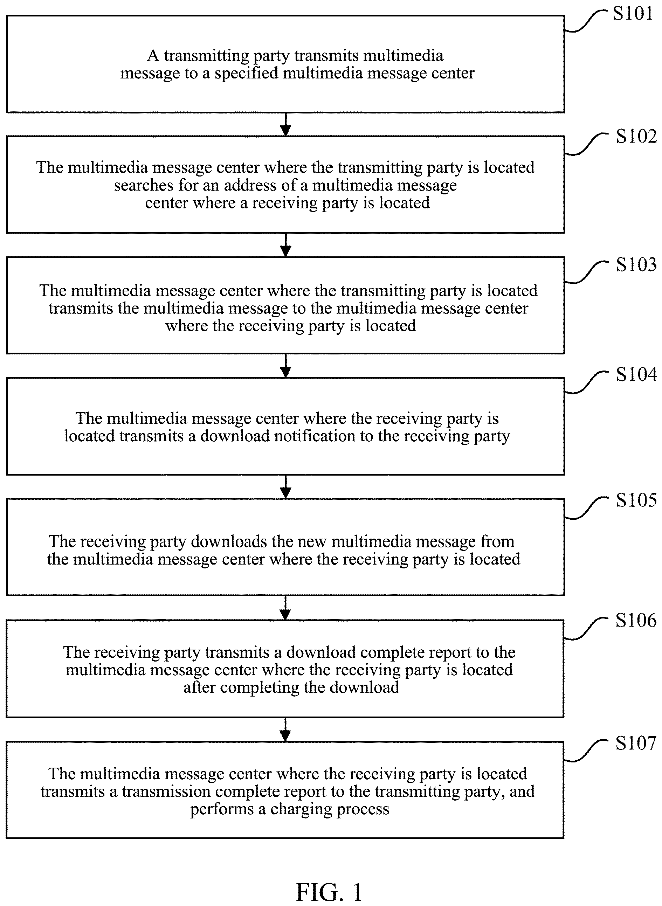

With the popularity of multimedia message terminals and the expansion of Service Provider (SP) traffic, the multimedia message is increasingly applied to daily lives and works, and multimedia message services have been vigorously developed. To this end, various operators establish a number of multimedia message centers respectively. The multimedia message centers are the core of the whole multimedia message system, and storing and processing the multimedia message comprise input/output of the multimedia message, address resolution, notifying, reporting etc., and meanwhile, the multimedia message center will be responsible for operations such as transfer of the multimedia message between different multimedia message centers etc. At present, all the various operators take a method for pre-setting a multimedia message center to which a user belongs, i.e., when each user transmits and receives multimedia message, the process must be performed by a preset multimedia message center. A flowchart of an existing multimedia message transmitting method is shown in FIG. 1, which comprises the following steps.

In S101, a transmitting party transmits multimedia message to a specified multimedia message center.

In S102, the specified multimedia message center (i.e., a multimedia message center where the transmitting party is located) searches for an address of a multimedia message center where a receiving party is located after receiving the multimedia message.

In S103, the multimedia message center where the transmitting party is located transmits the received multimedia message to the multimedia message center where the receiving party is located according to the searched address.

In S104, the multimedia message center where the receiving party is located transmits a download notification to the receiving party after receiving the multimedia message.

In S105, the receiving party downloads the multimedia message from the multimedia message center where the receiving party is located after receiving the download notification.

In S106, the receiving party transmits a download complete report to the multimedia message center where the receiving party is located after completing the download.

In S107, the multimedia message center where the receiving party is located transmits a transmission complete report to the transmitting party through the multimedia message center where the transmitting party is located, and performs related charging processing operations.

In the existing multimedia message transmitting system, both the transmitting party and the receiving party fixedly belong to a certain multimedia message center, and cannot be dynamically adjusted. Thus, for the whole multimedia message transmitting system, as the number of users of various multimedia message centers is preset, there may be a condition that users belonging to a certain multimedia message center or certain multimedia message centers extensively use multimedia messages while users belonging to other multimedia message centers seldom use the multimedia messages within a certain time, and therefore a case that traffic is imbalanced among various multimedia message centers occurs. In order to solve the problem that the traffic is imbalanced, based on the current multimedia message transmitting method, it can be ensured that the traffic of the multimedia message center does not exceed the processing capability thereof only if more multimedia message centers are established to reduce the number of users of various multimedia message centers; however, this will necessarily results in a waste of device resources.

Document US20090233618 A1 discloses a method for increasing multimedia messaging service system capacity, it comprises: a message distributing device determining a first multimedia messaging service center (MMSC) node for receiving multimedia message, and forwarding the multimedia message to a relay of the first MMSC node, after it having received multimedia message; the multimedia message being transmitted to a server of the first MMSC by the relay of the first MMSC node, and stored in the server of the first MMSC; the server of the first MMSC node corresponding to the relay of the first MMSC relay uniquely; the server of the first MMSC node sending the multimedia message to the receipt party via the relay of the first MMSC node and the message distributing device.

Document EP1555836 A1 discloses a system which has a domain name server (DNS) for transmitting several Internet protocol (IP) addresses from a multi-media messaging center (MMSC) of a destination user, if a request is provided from a multi-media messaging service (MMS) relay station or transmitting user during direct connection with the destination user. The DNS transmits the IP addresses of the MMS relay station, if the request is provided from other different users.

Document WO0133803A1 discloses a method which enables the transmitting of multimedia messages between different operators.

Document CN101068378A discloses a disaster tolerating method of multimedia message service system which includes revising IP address in corresponding relation of prestored MMSC to be IP address of corresponding disaster-tolerant MMSC when disaster occurred on MMSC is confirmed and sending message required to be sent to said MMSC to said disaster-tolerant MMSC by querying IP address corresponding to said MMSC.

### Summary of the Invention

The main purpose of the present invention is to provide a multimedia message transmitting method, a multimedia message transmitting device, and a domain name system server, which are used to solve the problem of a waste of device resources due to the unbalance of traffic processed by the multimedia message centers, which exists in the related art.

The embodiment of the present invention uses the following technical schemes:
A multimedia message transmitting method comprises: a multimedia message transmitting device transmitting a multimedia message transmitting request to a domain name system server after receiving multimedia message submitted by a multimedia message transmitting party; receiving identification information of multimedia message centers returned by the domain name system server, wherein, the identification information is identification information of a multimedia message center selected from various multimedia message centers by the domain name system server after receiving the transmitting request; and the multimedia message transmitting device transmitting the received multimedia message to the multimedia message center identified by the received identification information.

A multimedia message transmitting device comprises: a multimedia message receiving unit, configured to receive multimedia message submitted by a multimedia message transmitting party; a request transmitting unit, configured to transmit a multimedia message transmitting request to a domain name system server after the multimedia message receiving unit receives the multimedia message submitted by the multimedia message transmitting party; an identification information receiving unit, configured to receive identification information of multimedia message centers returned by the server; and a multimedia message transmitting unit, configured to transmit the multimedia message received by the multimedia message receiving unit to a multimedia message center identified by the identification information received by the identification information receiving unit.

A domain name system server comprises: a request receiving unit, configured to receive a multimedia message transmitting request transmitted by a multimedia message transmitting device; a selecting unit, configured to select a multimedia message center from various multimedia message centers after the request receiving unit receives the transmitting request; and an identification information feedback unit, configured to feed back identification information of the multimedia message center selected by the selecting unit to the multimedia message transmitting device.

Compared with the related art, the multimedia message transmitting scheme provided by the embodiments of the present invention can dynamically allocate services according to the running conditions of various multimedia message centers, thus balancing the traffic of various multimedia message centers, helping to make full use of the processing abilities of various multimedia message centers, and improving the availability of device resources.

### Brief Description of Drawings

FIG. 1 is a flowchart of an existing multimedia message transmitting method;
FIG. 2 is a flowchart of a first embodiment of a multimedia message transmitting method according to the present invention;
FIG. 3 is a flowchart of a second embodiment of a multimedia message transmitting method according to the present invention;
FIG. 4 is a structural diagram of an embodiment of a multimedia message transmitting device according to the present invention; and
FIG. 5 is a structural diagram of an embodiment of a DNS server according to the present invention.

### Preferred Embodiments of the Present Invention

In the scheme of transmitting multimedia message according to the present invention, by a Domain Name System (DNS) server interacting with all multimedia message centers in the system by information, selecting a multimedia message center according to the information obtained by the interaction and allocating the multimedia message transmitting party to the selected multimedia message center, the scheme provided by the present invention can dynamically allocate the multimedia message transmitting party according to the running conditions of various multimedia message centers in the system, thus being able to make full use of the processing ability of various multimedia message centers, and therefore it solves the problem of a waste of device resources of the multimedia message center due to the unbalance of traffic processed by the multimedia message center in the multimedia message transmitting system, which exists in the related art. In addition, the scheme of transmitting multimedia message provided by the present invention can further avoid whole cutover of users when increasing the multimedia message centers, and thus can avoid manually adjusting operations of multimedia message centers to which the users belong when a fault occurs in several multimedia message centers, thus enhancing efficiency of the multimedia message transmission.

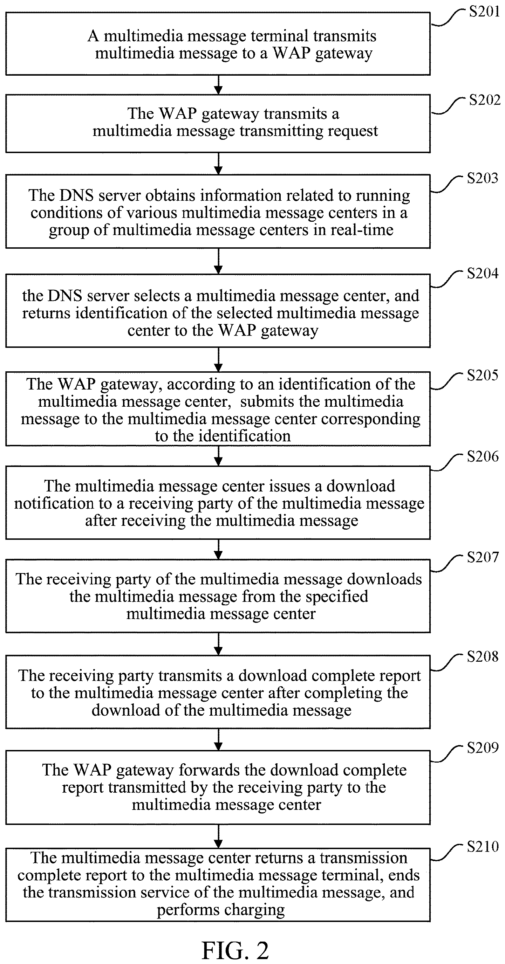

FIG. 2 is a flowchart of a first embodiment of a multimedia message transmitting method from one multimedia message terminal to another multimedia message terminal according to the present invention. As shown in FIG. 2, the method specifically comprises the following steps.

In S201, a user transmits multimedia message to a Wireless Application Protocol (WAP) gateway through a multimedia message terminal. At this time, the user is a multimedia message transmitting party, and the WAP gateway is a multimedia message transmitting device.

In S202, the WAP gateway transmits a multimedia message transmitting request to a DNS server after confirming that the message is multimedia message.

In S203, the DNS server obtains information related to running conditions of various multimedia message centers in the communication network through interacting with various multimedia message centers by information, and specifically, the DNS server can interact with the various multimedia message centers in the communication network through the Internet by information, and the interacted information comprises information related to the running conditions of the multimedia message centers such as traffic currently processed by the various multimedia message centers, current network throughout, used link information, service processing delay information etc.

It should be illustrated that the DNS server can determine various multimedia message centers which are running currently and various multimedia message centers which are not running currently by means of heartbeat message etc., and in addition, the DNS server can discover a new multimedia message center by means of configuration etc.; and here, the interaction between the DNS server and various multimedia message centers is not limited to the above means, and similarly comprises other interaction means which is able to implement the above functions.

In S204, the DNS server selects a multimedia message center according to the current related information of various multimedia message centers obtained by the above interaction, and then returns an identification of the selected multimedia message center to the WAP gateway.

The identification of the multimedia message center can be a Uniform/Universal Resource Locator (URL) address of the multimedia message center or an Identity (ID) number of the multimedia message center, or can also be other identification information which can uniquely identify the multimedia message center.

In the present step, the process that the DNS server obtains the current related information of various multimedia message centers according to the above interaction, and returns the identification of the selected multimedia message center to the WAP gateway, can be, but is not limited to the following several implementation modes.

In the first mode, the DNS server interacts with various multimedia message centers, obtains current network throughout of various multimedia message centers and maximum network throughout supported by the various multimedia message centers, determines a multimedia message center with the maximum idle throughout according to the obtained current network throughout of various multimedia message centers and maximum network throughout supported by the various multimedia message centers, and returns a URL or ID of the multimedia message center to the WAP gateway.

In the second mode, the DNS server interacts with various multimedia message centers to obtain currently processed traffic of various multimedia message centers and maximum traffic supported by the various multimedia message centers, determines a multimedia message center with the maximum idle processing capability according to the obtained currently processed traffic of various multimedia message centers and maximum traffic supported by the various multimedia message centers, and returns a URL or ID of the multimedia message center to the WAP gateway.

In the third mode, the DNS server interacts with various multimedia message centers to obtain current service processing delays of various multimedia message centers, determines a multimedia message center with a minimum service processing delay according to the obtained current service processing delays of various multimedia message centers, and returns a URL or ID of the multimedia message center to the WAP gateway.

In the fourth mode, the DNS server interacts with various multimedia message centers to obtain change conditions of current traffic of various multimedia message centers, predicts a multimedia message center with a maximum reduction of the traffic according to the obtained change conditions of currently traffic of various multimedia message centers, and returns a URL or ID of the multimedia message center to the WAP gateway.

In S205, the WAP gateway, according to an identification of the multimedia message center returned by the DNS server, submits the multimedia message submitted by the user to the multimedia message center corresponding to the identification.

In S206, the multimedia message center issues a download notification to a receiving party of the multimedia message after receiving the multimedia message, wherein, an transmission identification transaction_id in the notification comprises identification information of the multimedia message center, such as mmscid, mmscip etc., and the multimedia message center can be uniquely determined according to the identification information.

In S207, the receiving party of the multimedia message downloads the multimedia message from the specified multimedia message center according to the identification information such as mmscid, mmscip etc. of the multimedia message center contained in the transmission identification transaction_id in the notification, after receiving the download notification.

In S208, the receiving party transmits a download complete report to the multimedia message center after completing the download of the multimedia message; and the download complete report can be transmitted through the WAP gateway, and the download complete report comprises the same transmission identification transaction_id as that in the download notification.

In S209, the WAP gateway forwards the download complete report transmitted by the receiving party to the multimedia message center according to the transmission identification transaction_id contained in the download complete report; and here, the WAP gateway firstly decodes the download complete report, obtains the identification information of the multimedia message center from the transmission identification transaction_id, and determines to which multimedia message center the download complete report should be transmitted.

In S210, the multimedia message center returns a transmission complete report to the multimedia message terminal after receiving the download complete report, ends the process of transmitting the multimedia message, and completes related charging operations.

In the scheme of transmitting multimedia message illustrated in FIG. 2, the contact between a multimedia message terminal and a mobile network is implemented through a WAP gateway. Here, a multimedia message terminal of a transmitting party and a multimedia message terminal of a receiving party can be terminals of a second generation mobile communication system or a third generation mobile communication system, and similarly, can be other types of multimedia message terminals.

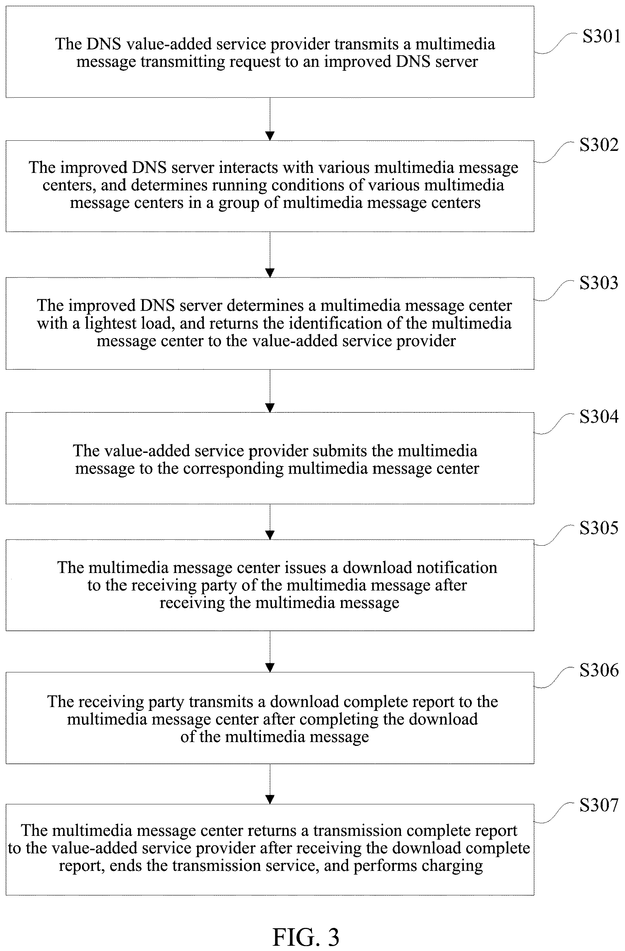

FIG. 3 is a flowchart of an embodiment of a method for transmitting multimedia message to a user terminal by a value-added service provider according to the present invention. As shown in FIG. 3, the method comprises the following steps.

In S301, the value-added service provider transmits a multimedia message transmitting request to a DNS server using a multimedia message transmitting device, and at this time, the value-added service provider is a multimedia message transmitting party.

In S302, the DNS server interacts with various multimedia message centers, obtains information related to running conditions of various multimedia message centers in the communication network, and specifically, the DNS server can interact with the various multimedia message centers in the communication network through the Internet by the information, and the interacted information comprises information related to the running conditions of the multimedia message centers such as currently processed traffic, current network throughout, used link information, service processing delay information etc.

The DNS server can determine various multimedia message centers which are running currently and various multimedia message centers which are not running currently by means of heartbeat message etc., and in addition, the DNS server can discover a new multimedia message center by means of configuration etc.; and here, the interaction between the DNS server and various multimedia message centers is not limited to the above means, and similarly comprises other similar interaction means which is able to implement the above functions.

In S303, the DNS server selects a multimedia message center according to the current related information of various multimedia message centers obtained by the above interaction, and then returns the identification of the selected multimedia message center which is most suitable to the multimedia message transmitting device of the value-added service provider. The selection process can be, but is not limited to the following several implementation modes.

In the first mode, the DNS server interacts with various multimedia message centers, obtains current network throughout of various multimedia message centers and maximum network throughout supported by the various multimedia message centers, determines a multimedia message center with the maximum idle throughout according to the obtained current network throughout of various multimedia message centers and maximum network throughout supported by the various multimedia message centers, and returns a URL or ID of the multimedia message center to the value-added service provider.

In the second mode, the DNS server interacts with various multimedia message centers to obtain currently processed traffic of various multimedia message centers and maximum traffic supported by the various multimedia message centers respectively, determines a multimedia message center with the maximum idle processing capability according to the obtained current processing traffic of various multimedia message centers and maximum traffic supported by the various multimedia message centers, and returns a URL or ID of the multimedia message center to the value-added service provider.

In the third mode, the DNS server interacts with various multimedia message centers to obtain current service processing delays of various multimedia message centers, determines a multimedia message center with a minimum service processing delay according to the obtained current service processing delays of various multimedia message centers, and returns a URL or ID of the multimedia message center to the value-added service provider.

In the fourth mode, the DNS server interacts with various multimedia message centers to obtain change conditions of current traffic of various multimedia message centers, predicts a multimedia message center with a maximum reduction of the traffic according to the obtained change conditions of current traffic of various multimedia message centers, and returns a URL or ID of the multimedia message center to the value-added service provider.

In S304, the value-added service provider, according to an identification of the multimedia message center returned by the DNS server, submits the multimedia message submitted by the user to the multimedia message center identified by the identification.

In S305, the multimedia message center issues a download notification to the receiving party of the multimedia message after receiving the multimedia message, wherein, an transmission identification transaction_id in the notification contains identification information of the multimedia message center, such as mmscid, mmscip etc., and the multimedia message center can be uniquely determined according to the identification information.

In S306, the receiving party of the multimedia message downloads the multimedia message from the specified multimedia message center according to the identification information of the multimedia message center contained in the transmission identification transaction_id in the notification after receiving the download notification, and transmits the download complete report to the multimedia message center after completing the download of the multimedia message.

In S307, the multimedia message center returns a transmission complete report to the value-added service provider after receiving the download complete report, ends the process of transmitting the multimedia message, and completes related charging operations.

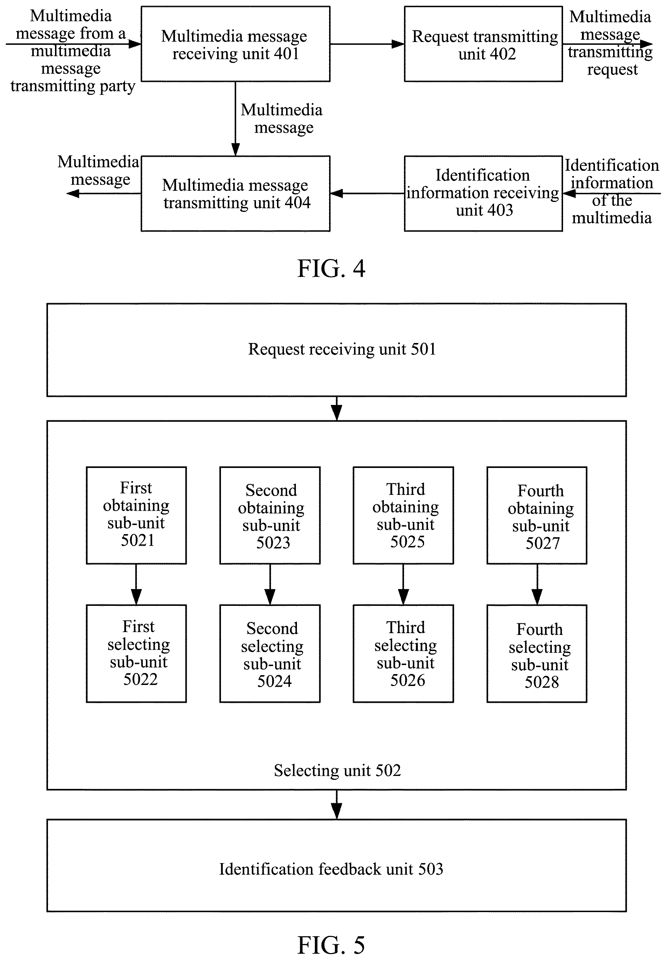

FIG. 4 is a structural diagram of an embodiment of a multimedia message transmitting device according to the present invention. As shown in FIG. 4, the device at least comprises:
a multimedia message receiving unit 401, which is configured to receive multimedia message submitted by a multimedia message transmitting party;
a request transmitting unit 402, which is configured to transmit a multimedia message transmitting request to a DNS server after the multimedia message receiving unit receives the multimedia message submitted by the multimedia message transmitting party;
an identification information receiving unit 403, which is configured to receive identification information of a multimedia message center returned by the DNS server, wherein, the identification information can uniquely identify a multimedia message center identified by itself;
a multimedia message transmitting unit 404, which is configured to transmit the multimedia message received by the multimedia message receiving unit to a multimedia message center identified by the identification information received by the identification information receiving unit.

In the actual applications, the multimedia message transmitting device according to the present invention can be, but is not limited to a WAP gateway receiving multimedia message of a user, a multimedia message transmitting device of a value-added service provider.

FIG. 5 is a structural diagram of an embodiment of a DNS server according to the present invention. As shown in FIG. 5, the DNS server specifically comprises:
a request receiving unit 501, which is configured to receive a multimedia message transmitting request transmitted by a multimedia message transmitting device;
a selecting unit 502, which is configured to select a multimedia message center from various multimedia message centers after the request receiving unit receives the transmitting request.

Wherein, the selecting unit 502 can comprises: a first obtaining sub-unit 5021, configured to obtain current network throughout of the various multimedia message centers and maximum network throughout supported by the various multimedia message centers respectively; and a first selecting sub-unit 5022, configured to select a multimedia message center with the maximum current idle throughout according to the current network throughout of the various multimedia message centers and the maximum network throughout supported by the various multimedia message centers obtained by the first obtaining sub-unit. Alternatively, the selecting unit 502 comprises: a second obtaining sub-unit 5023, configured to obtain currently processed traffic of the various multimedia message centers and maximum processed traffic supported by the various multimedia message centers respectively; and a second selecting sub-unit 5024, configured to select a multimedia message center with the maximum current idle service processing capability according to the currently processed traffic of the various multimedia message centers and the maximum processed traffic supported by the various multimedia message centers obtained by the second obtaining sub-unit. Alternatively, the selecting unit 502 comprises: a third obtaining sub-unit 5025, configured to obtain current service processing delays of the various multimedia message centers respectively; and a third selecting sub-unit 5026, configured to select a multimedia message center with a minimum service processing delay according to the current service processing delays of the various multimedia message centers obtained by the third obtaining sub-unit. Alternatively, the selecting unit 502 comprises: a fourth obtaining sub-unit 5027, configured to obtain change conditions of currently processed traffic of the various multimedia message centers respectively; and a fourth selecting sub-unit 5028, configured to select a multimedia message center with a maximum reduction of the currently processed traffic according to the change conditions of currently processed traffic of the various multimedia message centers obtained by the fourth obtaining sub-unit.

In the actual applications, a multimedia message center can be selected from the various multimedia message centers by using the above one group of an obtaining sub-unit and a selecting sub-unit corresponding to each other.

An identification feedback unit 503 is configured to feed back identification information of the multimedia message center selected by the selecting unit to the multimedia message transmitting device.

## Claims

1. A multimedia message transmitting method, comprising:
a multimedia message transmitting device transmitting a multimedia message transmitting request to a domain name system server after receiving multimedia message submitted by a multimedia message transmitting party (S201, S202; S301);
**characterized in that** the method further comprises the following steps:
the domain name system server obtaining information related to running conditions of various multimedia message centers in a communication network through interacting with the various multimedia message centers (S203; S302), and selecting a multimedia message center from the various multimedia message centers according to the information related to the running conditions of the various multimedia message centers obtained by the interaction (S204; S303);
the multimedia message transmitting device receiving identification information of the multimedia message center returned by the domain name system server, wherein, the identification information is the identification information of the multimedia message center selected from the various multimedia message centers by the domain name system server according to the information related to the running conditions of the various multimedia message centers obtained by the interaction after receiving the transmitting request; and
the multimedia message transmitting device transmitting the received multimedia message to the multimedia message center identified by the received identification information (S205; S304).

2. The multimedia message transmitting method according to claim 1, wherein, the domain name system server selecting a multimedia message center from the various multimedia message centers specifically comprises:
the domain name system server obtaining current network throughout of the various multimedia message centers and maximum network throughout supported by the various multimedia message centers respectively; and
selecting a multimedia message center with maximum current idle throughout according to the obtained current network throughout of the various multimedia message centers and the maximum network throughout supported by the various multimedia message centers.

3. The multimedia message transmitting method according to claim 1, wherein, the domain name system server selecting a multimedia message center from the various multimedia message centers comprises:
the domain name system server obtaining currently processed traffic of the various multimedia message centers and maximum processed traffic supported by the various multimedia message centers respectively; and
selecting a multimedia message center with a maximum current idle service processing capability according to the obtained currently processed traffic of the various multimedia message centers and the maximum processed traffic supported by the various multimedia message centers.

4. The multimedia message transmitting method according to claim 1, wherein, the domain name system server selecting a multimedia message center from the various multimedia message centers comprises:
the domain name system server obtaining current service processing delays of the various multimedia message centers respectively; and
selecting a multimedia message center with a minimum service processing delay according to the obtained current service processing delays of the various multimedia message centers.

5. The multimedia message transmitting method according to claim 1, wherein, the domain name system server selecting a multimedia message center from the various multimedia message centers comprises:
the domain name system server obtaining change conditions of currently processed traffic of the various multimedia message centers respectively; and
selecting a multimedia message center with a maximum reduction of the currently processed traffic according to the obtained change conditions of currently processed traffic of the various multimedia message centers.

6. A multimedia message transmitting device, comprising:
a multimedia message receiving unit (401), configured to receive a multimedia message submitted by a multimedia message transmitting party;
a request transmitting unit (402), configured to transmit a multimedia message transmitting request to a domain name system server after the multimedia message receiving unit receives the multimedia message submitted by the multimedia message transmitting party;
**characterized in that** the device further comprises:
an identification information receiving unit (403), configured to receive identification information of a multimedia message center returned by the domain name system server; wherein, the selected multimedia message center is selected by the domain name system server from various multimedia message centers according to information related to running conditions of various multimedia message centers obtained by interacting with the various multimedia message centers; and
a multimedia message transmitting unit (404), configured to transmit the multimedia message received by the multimedia message receiving unit to the multimedia message center identified by the identification information received by the identification information receiving unit.

7. The multimedia message transmitting device according to claim 6, wherein, the multimedia message transmitting device is a Wireless Application Protocol WAP gateway, a multimedia message transmitting device of a value-added service provider.

8. A domain name system server, comprising:
a request receiving unit (501), configured to receive a multimedia message transmitting request transmitted by a multimedia message transmitting device;
**characterized in that** the domain name system server further comprises:
a selecting unit (502), configured to obtain information related to running conditions of various multimedia message centers in a communication network through interacting with the various multimedia message centers and select a multimedia message center from the various multimedia message centers according to the information related to the running conditions of the various multimedia message centers obtained by the interaction after the request receiving unit receives the multimedia message transmitting request; and
an identification information feedback unit (503), configured to feed back identification information of the multimedia message center selected by the selecting unit from the various multimedia message centers according to the information related to the running conditions of the various multimedia message centers obtained by the interaction, to the multimedia message transmitting device.

9. The domain name system server according to claim 8, wherein, the selecting unit specifically comprises:
a first obtaining sub-unit (5021), configured to obtain current network throughout of the various multimedia message centers and maximum network throughout supported by the various multimedia message centers respectively; and
a first selecting sub-unit (5022), configured to select a multimedia message center with maximum current idle throughout according to the current network throughout of the various multimedia message centers and the maximum network throughout supported by the various multimedia message centers obtained by the first obtaining sub-unit.

10. The domain name system server according to claim 8, wherein, the selecting unit specifically comprises:
a second obtaining sub-unit (5023), configured to obtain currently processed traffic of the various multimedia message centers and maximum processed traffic supported by the various multimedia message centers respectively; and
a second selecting sub-unit (5024), configured to select a multimedia message center with a maximum current idle service processing capability according to the currently processed traffic of the various multimedia message centers and the maximum processed traffic supported by the various multimedia message centers obtained by the second obtaining sub-unit.

11. The domain name system server according to claim 8, wherein, the selecting unit specifically comprises:
a third obtaining sub-unit (5025), configured to obtain current service processing delays of the various multimedia message centers respectively; and
a third selecting sub-unit (5026), configured to select a multimedia message center with a minimum service processing delay according to the current service processing delays of the various multimedia message centers obtained by the third obtaining sub-unit.

12. The domain name system server according to claim 8, wherein, the selecting unit specifically comprises:
a fourth obtaining sub-unit (5027), configured to obtain change conditions of currently processed traffic of the various multimedia message centers respectively; and
a fourth selecting sub-unit (5028), configured to select a multimedia message center with a maximum reduction of the currently processed traffic according to the change conditions of currently processed traffic of the various multimedia message centers obtained by the fourth obtaining sub-unit.

## Patentansprüche

1. Verfahren zum Übertragen von Multimedianachrichten, umfassend:
eine Multimedia-Nachrichtenübertragungsvorrichtung, die eine Multimedia-Nachrichtenübertragungsanfrage an einen Domainnamen-Systemserver sendet, nachdem sie eine Multimedianachricht empfangen hat, die durch eine Multimedia-Nachrichtenübertragungspartei (S201, S202; S301) übermittelt wurde;
**dadurch gekennzeichnet, dass** das Verfahren ferner die folgenden Schritte umfasst:
Erhalten, durch den Domainnamen-Systemserver, von Informationen in Bezug auf derzeitige Bedingungen verschiedener Multimedia-Nachrichtenzentren in einem Kommunikationsnetzwerk durch Interaktion mit den verschiedenen Multimedia-Nachrichtenzentren (S203; S302) und Auswählen eines Multimedia-Nachrichtenzentrums aus den verschiedenen Multimedia-Nachrichtenzentren gemäß der Information in Bezug auf die derzeitigen Bedingungen der verschiedenen Multimedia-Nachrichtenzentren, die durch die Interaktion (S204; S303) erhalten wurden;
Empfangen, durch die Multimedia-Nachrichtenübertragungsvorrichtung, der Identifikationsinformation des Multimedia-Nachrichtenzentrums, die von dem Domainnamen-Systemserver zurückgegeben wird, wobei die Identifikationsinformation die Identifikationsinformation des Multimedia-Nachrichtenzentrums ist, das aus den verschiedenen Multimedia-Nachrichtenzentren durch den Domainnamen-Systemserver gemäß der Information in Bezug auf die derzeitigen Bedingungen der verschiedenen Multimedia-Nachrichtenzentren, die durch die Interaktion erhalten wurde, nach dem Empfangen der Übertragungsanfrage ausgewählt wurde; und
Übertragen, durch die Multimedia-Nachrichtenübertragungsvorrichtung, der empfangenen Multimedianachricht an das Multimedia-Nachrichtenzentrum, das durch die empfangene Identifizierungsinformation (S205; S304) identifiziert wurde.

2. Verfahren zum Übertragen von Multimedianachrichten nach Anspruch 1, wobei das Auswählen, durch den Domainnamen-Systemserver, eines Multimedia-Nachrichtenzentrums aus den verschiedenen Multimedia-Nachrichtenzentren, insbesondere umfasst:
Erhalten, durch den Domainnamen-Systemserver, der derzeitigen Netzwerkleistung durch die verschiedenen Multimedia-Nachrichtenzentren und der maximalen Netzwerkleistung, die durch die verschiedenen Multimedia-Nachrichtenzentren durchgehend unterstützt wird; und
Auswählen eines Multimedia-Nachrichtenzentrums mit maximaler inaktiver Zeit gemäß der erhaltenen derzeitigen Netzwerkleistung in den verschiedenen Multimedia-Nachrichtenzentren und der maximalen Netzwerkleistung, die durch die verschiedenen Multimedia-Nachrichtenzentren unterstützt wird.

3. Verfahren zum Übertragen von Multimedianachrichten nach Anspruch 1, wobei das Auswählen, durch den Domainnamen-Systemserver, eines Multimedia-Nachrichtenzentrums aus den verschiedenen Multimedia-Nachrichtenzentren, umfasst:
Erhalten, durch den Domainnamen-Systemserver, des derzeit verarbeiteten Verkehrs der verschiedenen Multimedia-Nachrichtenzentren und des maximal verarbeiteten Verkehrs, der durch die jeweiligen verschiedenen Multimedia-Nachrichtenzentren unterstützt wird; und
Auswählen eines Multimedia-Nachrichtenzentrums mit maximaler inaktiver Zeitverarbeitungskapazität gemäß dem erhaltenen derzeit verarbeiteten Verkehr der verschiedenen Multimedia-Nachrichtenzentren und dem maximalen verarbeiteten Verkehr, der durch die verschiedenen Multimedia-Nachrichtenzentren unterstützt wird.

4. Verfahren zum Übertragen von Multimedianachrichten nach Anspruch 1, wobei das Auswählen, durch den Domainnamen-Systemserver, eines Multimedia-Nachrichtenzentrums aus den verschiedenen Multimedia-Nachrichtenzentren, umfasst:
Erhalten, durch den Domainnamen-Systemserver, derzeitiger Dienstverarbeitungsverzögerungen der verschiedenen Multimedia-Nachrichtenzentren; und
Auswählen eines Multimedia-Nachrichtenzentrums mit einer minimalen Dienstverarbeitungsverzögerung gemäß den erhaltenen derzeitigen Dienstverarbeitungsverzögerungen der verschiedenen Multimedia-Nachrichtenzentren.

5. Verfahren zum Übertragen von Multimedianachrichten nach Anspruch 1, wobei das Auswählen, durch den Domainnamen-Systemserver, eines Multimedia-Nachrichtenzentrums aus den verschiedenen Multimedia-Nachrichtenzentren, umfasst:
Erhalten, durch den Domainnamen-Systemserver, von Veränderungsbedingungen des derzeit verarbeiteten Verkehrs der jeweiligen verschiedenen Multimedia-Nachrichtenzentren; und
Auswählen eines Multimedia-Nachrichtenzentrums mit einer maximalen Reduktion des derzeit verarbeiteten Verkehrs gemäß den erhaltenen Veränderungsbedingungen des derzeit verarbeiteten Verkehrs der verschiedenen Multimedia-Nachrichtenzentren.

6. Multimedia-Nachrichtenübertragungsvorrichtung, umfassend:
eine Multimedia-Nachrichtenempfangseinheit (401), die zum Empfangen einer Multimedia-Nachricht konfiguriert ist, die durch eine Multimedia-Nachrichtenübertragungspartei übermittelt wird;
eine Anfrageübertragungseinheit (402), die zum Übertragen einer Multimedia-Nachrichtenübertragungsanfrage an einen Domainnamen-Systemserver konfiguriert ist, nachdem die Multimedia-Nachrichtenempfangseinheit die von der Multimedia-Nachrichtenübertragungspartei übermittelte Multimedia-Nachricht empfangen hat;
**dadurch gekennzeichnet, dass** die Vorrichtung ferner umfasst:
eine Identifikationsinformation-Empfangseinheit (403), die zum Empfangen von Identifikationsinformation eines Multimedia-Nachrichtenzentrums konfiguriert ist, das von dem Domainnamen-Systemserver zurückgegeben wird; wobei das ausgewählte Multimedia-Nachrichtenzentrum durch den Domainnamen-Systemserver aus verschiedenen Multimedia-Nachrichtenzentren gemäß der Information ausgewählt wird, die sich auf derzeitige Bedingungen verschiedener Multimedia-Nachrichtenzentren bezieht, die durch Interagieren mit den verschiedenen Multimedia-Nachrichtenzentren erhalten wird; und
eine Multimedia-Nachrichtenübertragungseinheit (404), die zum Übertragen der durch die Multimedia-Nachrichtenempfangseinheit empfangene Multimedianachricht an das Multimedia-Nachrichtenzentrum, das durch die Identifizierungsinformation identifiziert wird, die von der Identifizierungsinformation-Empfangseinheit empfangen wurde, konfiguriert ist.

7. Multimedia-Nachrichtenübertragungsvorrichtung nach Anspruch 6, wobei die Multimedianachrichten-Übertragungsvorrichtung ein Wireless Application Protocol WAP-Gateway, eine Multimedia-Nachrichtenübertragungsvorrichtung eines Mehrwertdienstanbieters ist.

8. Domainnamen-Systemserver, umfassend:
eine Anfrageempfangseinheit (501), die zum Empfangen einer Multimedia-Nachrichtenübertragungsanfrage konfiguriert ist, die durch eine Multimedia-Nachrichtenübertragungsvorrichtung übertragen wird;
**dadurch gekennzeichnet, dass** der Domainnamen-Systemserver ferner umfasst:
eine Auswahleinheit (502), die zum Erhalten von Informationen in Bezug auf derzeitige Bedingungen verschiedener Multimedia-Nachrichtenzentren in einem Kommunikationsnetzwerk durch Interaktion mit den verschiedenen Multimedia-Nachrichtenzentren und Auswählen eines Multimedia-Nachrichtenzentrums aus den verschiedenen Multimedia-Nachrichtenzentren gemäß der Information in Bezug auf die derzeitigen Bedingungen der verschiedenen Multimedia-Nachrichtenzentren, die durch die Interaktion erhalten wurden, konfiguriert ist, nachdem die Anfrageempfangseinheit die Multimedia-Nachrichtenübertragungsanfrage empfangen hat; und
eine Identifikationsinformationsrückkopplungseinheit (503), die konfiguriert ist, um Identifikationsinformationen des Multimedia-Mitteilungszentrums rückzukoppeln, das von der Auswahleinheit aus den verschiedenen Multimedia-Mitteilungszentren gemäß der Information in Bezug auf die laufenden Bedingungen der verschiedenen Multimedia-Nachrichtenzentren, die durch die Interaktion erhalten wurden, an die Multimedia-Nachrichtenübertragungsvorrichtung ausgewählt wurde.

9. Domainnamen-Systemserver nach Anspruch 8, wobei die Auswahleinheit insbesondere umfasst:
eine erste erhaltende Untereinheit (5021), die zum Erhalten der derzeitigen Netzwerkleistung über die verschiedenen Multimedia-Nachrichtenzentren und der maximalen Netzwerkleistung, die über die verschiedenen Multimedia-Nachrichtenzentren unterstützt wird, konfiguriert ist; und
eine erste Auswahluntereinheit (5022), die zum Auswählen eines Multimedia-Nachrichtenzentrums mit maximaler inaktiver Zeit gemäß der erhaltenen aktuellen Netzwerkleistung in den verschiedenen Multimedia-Nachrichtenzentren und der maximalen Netzwerkleistung, die durch die verschiedenen Multimedia-Nachrichtenzentren unterstützt wird, die durch die erste erhaltene Untereinheit erhalten wird, konfiguriert ist.

10. Domainnamen-Systemserver nach Anspruch 8, wobei die Auswahleinheit insbesondere umfasst:
eine zweite erhaltende Untereinheit (5023), die zum Erhalten des derzeit verarbeiteten Verkehrs der verschiedenen Multimedia-Nachrichtenzentren und des maximal verarbeiteten Verkehrs, der über die jeweiligen verschiedenen Multimedia-Nachrichtenzentren unterstützt wird, konfiguriert ist; und
eine zweite Auswahluntereinheit (5024), die zum Auswählen eines Multimedia-Nachrichtenzentrums mit einer maximalen inaktiven Zeitverarbeitungskapazität gemäß dem derzeit verarbeiteten Verkehr der verschiedenen Multimedia-Nachrichtenzentren und dem maximal verarbeiteten Verkehr, der durch die verschiedenen Multimedia-Nachrichtenzentren unterstützt wird, der durch die zweite erhaltene Untereinheit erhalten wird, konfiguriert ist.

11. Domainnamen-Systemserver nach Anspruch 8, wobei die Auswahleinheit insbesondere umfasst:
eine dritte erhaltene Untereinheit (5025), die zum Erhalten derzeitiger Dienstverarbeitungsverzögerungen der jeweiligen verschiedenen Multimedia-Nachrichtenzentren konfiguriert ist; und
eine dritte Auswahluntereinheit (5026), die zum Auswählen eines Multimedia-Nachrichtenzentrums mit einer minimalen Dienstverarbeitungsverzögerung gemäß den derzeitigen Dienstverarbeitungsverzögerungen der verschiedenen Multimedia-Nachrichtenzentren konfiguriert ist, die durch die dritte erhaltene Untereinheit erhalten werden.

12. Domainnamen-Systemserver nach Anspruch 8, wobei die Auswahleinheit insbesondere umfasst:
eine vierte erhaltene Untereinheit (5027), die zum Erhalten von Veränderungsbedingungen des derzeit verarbeiteten Verkehrs der verschiedenen Multimedia-Nachrichtenzentren konfiguriert ist; und
eine vierte Auswahl-Untereinheit (5028), die zum Auswählen eines Multimedia-Nachrichtenzentrums mit einer maximalen Reduzierung des derzeit verarbeiteten Verkehrs gemäß den Veränderungsbedingungen des derzeit verarbeiteten Verkehrs der verschiedenen Multimedia-Nachrichtenzentren konfiguriert ist, der durch die vierte erhaltene Untereinheit erhalten wird.

## Revendications

1. Procédé de transmission de messages multimédias comprenant :
la transmission par un dispositif de transmission de message multimédia d'une demande de transmission de message multimédia à un serveur de système de noms de domaine après la réception d'un message multimédia soumis par une partie de transmission de message multimédia (S201, S202 ; S301) ;
**caractérisé en ce que** le procédé comprend en outre les étapes suivantes :
l'obtention par le serveur de système de noms de domaine d'informations relatives à des conditions de fonctionnement de divers centres de messages multimédias dans un réseau de communication par interaction avec les divers centres de messages multimédias (S203 ; S302), et la sélection d'un centre de messages multimédias parmi les divers centres de messages multimédias en fonction des informations relatives à des conditions de fonctionnement des divers centres de messages multimédias obtenues par l'interaction (S204 ; S303) ;
la réception par le dispositif de transmission de message multimédia d'informations d'identification du centre de messages multimédias renvoyées par le serveur de système de noms de domaine, dans lequel les informations d'identification sont les informations d'identification du centre de messages multimédias sélectionné parmi les divers centres de messages multimédias par le serveur de système de noms de domaine en fonction des informations relatives aux conditions de fonctionnement des divers centres de messages multimédias obtenues par l'interaction après la réception de la demande de transmission ; et
la transmission par le dispositif de transmission de message multimédia du message multimédia reçu au centre de messages multimédias identifié par les informations d'identification reçues (S205 ; S304).

2. Procédé de transmission de messages multimédias selon la revendication 1, dans lequel la sélection par le serveur de système de noms de domaine d'un centre de messages multimédias parmi les divers centres de messages multimédias comprend spécifiquement :
l'obtention par le serveur de système de noms de domaine d'un débit de réseau actuel des divers centres de messages multimédias et d'un débit de réseau maximal supporté respectivement par les divers centres de messages multimédias ; et
la sélection d'un centre de messages multimédias avec un débit à vide actuel maximal en fonction du débit de réseau actuel obtenu des divers centres de messages multimédias et du débit de réseau maximal supporté par les divers centres de messages multimédias.

3. Procédé de transmission de messages multimédias selon la revendication 1, dans lequel la sélection par le serveur de système de noms de domaine d'un centre de messages multimédias parmi les divers centres de messages multimédias comprend :
l'obtention par le serveur de système de noms de domaine d'un trafic actuellement traité des divers centres de messages multimédias et d'un trafic traité maximal supporté respectivement par les divers centres de messages multimédias ; et
la sélection d'un centre de messages multimédias avec une capacité de traitement de service à vide actuelle maximale en fonction du trafic actuellement traité obtenu des divers centres de messages multimédias et du trafic traité maximal supporté par les divers centres de messages multimédias.

4. Procédé de transmission de messages multimédias selon la revendication 1, dans lequel la sélection par le serveur de système de noms de domaine d'un centre de messages multimédias parmi les divers centres de messages multimédias comprend :
l'obtention par le serveur de système de noms de domaine de retards de traitement de service actuels respectivement des divers centres de messages multimédias ; et
la sélection d'un centre de messages multimédias avec un retard de traitement de service minimal en fonction des retards de traitement de service actuels obtenus des divers centres de messages multimédias.

5. Procédé de transmission de messages multimédias selon la revendication 1, dans lequel la sélection par le serveur de système de noms de domaine d'un centre de messages multimédias parmi les divers centres de messages multimédias comprend :
l'obtention par le serveur de système de noms de domaine de conditions de changement d'un trafic actuellement traité respectivement des divers centres de messages multimédias ; et
la sélection d'un centre de messages multimédias avec une réduction minimale du trafic actuellement traité en fonction des conditions de changement obtenues d'un trafic actuellement traité des divers centres de messages multimédias.

6. Dispositif de transmission de message multimédia comprenant :
une unité de réception de message multimédia (401) configurée pour recevoir un message multimédia soumis par une partie de transmission de message multimédia ;
une unité de transmission de demande (402) configurée pour transmettre une demande de transmission de message multimédia à un serveur de système de noms de domaine après que l'unité de réception de message multimédia reçoit le message multimédia soumis par la partie de transmission de message multimédia ;
**caractérisé en ce que** le dispositif comprend en outre :
une unité de réception d'informations d'identification (403) configurée pour recevoir des informations d'identification d'un centre de messages multimédias renvoyées par le serveur de système de noms de domaine ; dans lequel le centre de messages multimédias sélectionné est sélectionné par le serveur de système de noms de domaine parmi divers centres de messages multimédias en fonction d'informations relatives aux conditions de fonctionnement de divers centres de messages multimédias obtenues par interaction avec les divers centres de messages multimédias ; et
une unité de transmission de message multimédia (404) configurée pour transmettre le message multimédia reçu par l'unité de réception de message multimédia au centre de messages multimédias identifié par les informations d'identification reçues par l'unité de réception d'informations d'identification.

7. Dispositif de transmission de message multimédia selon la revendication 6, dans lequel le dispositif de transmission de message multimédia est une passerelle de protocole d'applications sans fil, WAP, un dispositif de transmission de message multimédia d'un fournisseur de services à valeur ajoutée.

8. Serveur de système de noms de domaine comprenant :
une unité de réception de demande (501) configurée pour recevoir une demande de transmission de message multimédia transmis par un dispositif de transmission de message multimédia ;
**caractérisé en ce que** le serveur de système de noms de domaine comprend en outre :
une unité de sélection (502) configurée pour obtenir des informations relatives à des conditions de fonctionnement de divers centres de messages multimédias dans un réseau de communication par interaction avec les divers centres de messages multimédias et sélectionner un centre de messages multimédias parmi les divers centres de messages multimédias en fonction des informations relatives aux conditions de fonctionnement des divers centres de messages multimédias obtenues par l'interaction après que l'unité de réception de demande reçoit la demande de transmission de message multimédia ; et
une unité de rétroaction d'informations d'identification (503) configurée pour retourner des informations d'identification du centre de messages multimédias sélectionné par l'unité de sélection parmi les divers centres de messages multimédias en fonction des informations relatives aux conditions de fonctionnement des divers centres de messages multimédias obtenues par l'interaction, au dispositif de transmission de message multimédia.

9. Serveur de système de noms de domaine selon la revendication 8, dans lequel l'unité de sélection comprend spécifiquement :
une première sous-unité d'obtention (5021) configurée pour obtenir un débit de réseau actuel des divers centres de messages multimédias et d'un débit de réseau maximal supporté respectivement par les divers centres de messages multimédias ; et
une première sous-unité de sélection (5022) configurée pour sélectionner un centre de messages multimédias avec un débit à vide actuel maximal en fonction du débit de réseau actuel des divers centres de messages multimédias et du débit de réseau maximal supporté par les divers centres de messages multimédias obtenus par la première sous-unité d'obtention.

10. Serveur de système de noms de domaine selon la revendication 8, dans lequel l'unité de sélection comprend spécifiquement :
une deuxième sous-unité d'obtention (5023) configurée pour obtenir un trafic actuellement traité des divers centres de messages multimédias et d'un trafic traité maximal supporté respectivement par les divers centres de messages multimédias ; et
une deuxième sous-unité de sélection (5024) configurée pour sélectionner un centre de messages multimédias avec une capacité de traitement de service à vide actuelle maximale en fonction du trafic actuellement traité des divers centres de messages multimédias et du trafic traité maximal supporté par les divers centres de messages multimédias obtenus par la deuxième sous-unité d'obtention.

11. Serveur de système de noms de domaine selon la revendication 8, dans lequel l'unité de sélection comprend spécifiquement :
une troisième sous-unité d'obtention (5025) configurée pour obtenir des retards de traitement de service actuels respectivement des divers centres de messages multimédias ; et
une troisième sous-unité de sélection (5026) configurée pour sélectionner un centre de messages multimédias avec un retard de traitement de service minimal en fonction des retards de traitement de service actuels des divers centres de messages multimédias obtenus par la troisième sous-unité d'obtention.

12. Serveur de système de noms de domaine selon la revendication 8, dans lequel l'unité de sélection comprend spécifiquement :
une quatrième sous-unité d'obtention (5027) configurée pour obtenir des conditions de changement d'un trafic actuellement traité respectivement des divers centres de messages multimédias ; et
une quatrième sous-unité de sélection (5028) configurée pour sélectionner un centre de messages multimédias avec une réduction minimale du trafic actuellement traité en fonction des conditions de changement du trafic actuellement traité des divers centres de messages multimédias obtenues par la quatrième sous-unité d'obtention.
